# EUROPEAN PATENT APPLICATION

(11) **EP 4 336 588 A1**
(43) Date of publication of application: **13.03.2024**
(21) Application number: 22856270.8
(22) Date of filing: 12.08.2022
(51) Int. Cl.: H01M 4/36, H01M 4/525, H01M 4/505, H01M 4/62, C01G 53/00, H01M 10/052, H01M 4/02

(54) **METHOD FOR PRODUCING POSITIVE ELECTRODE ACTIVE MATERIAL, AND POSITIVE ELECTRODE ACTIVE MATERIAL**

(30) Priority: 13.08.2021 KR 20210107038
(71) Applicant: LG Chem, Ltd., Yeongdeungpo-gu Seoul 07336 (KR)
(72) Inventor: SON, Min Hee, Daejeon 34122 (KR); LEE, Hyuck, Daejeon 34122 (KR); MOK, Duck Gyun, Daejeon 34122 (KR)
(74) Representative: Hoffmann Eitle
(86) International application number: PCT/KR2022/012082
(87) International publication number: WO 2023/018277

(57) **Abstract**

The present invention can minimize deterioration, occurring in a washing process, on the surface of a positive electrode active material and effectively control residual lithium, and relates to a method for producing a positive electrode active material process is within to the present invention includes the steps of: (A) preparing a lithium transition metal oxide; and (B) mixing the lithium transition metal oxide and a washing solution, washing the mixture, and then drying the mixture, wherein the washing solution contains a phosphorus-based compound and is a basic solution, and the phosphorus-based compound is contained in the washing solution such that the amount of phosphorus is 100-1,000 ppm in weight based on the lithium transition metal oxide, and to a positive electrode active material produced by the method.

## Description

### TECHNICAL FIELD

### Cross-reference to Related Applications

The present application claims the benefit of the priority of Korean Patent Application No. 10-2021-0107038, filed on August 13, 2021, the disclosure of which is incorporated herein in its entirety by reference.

### Technical Field

The present invention relates to a method for producing a positive electrode active material for a lithium secondary battery, and a positive electrode active material.

### BACKGROUND ART

A nickel-based positive electrode active material is produced by mixing a nickel-based positive electrode active material precursor and a lithium-containing raw material and then sintering the mixture, and in this process, there occurs a limitation in that unreacted lithium-containing raw material and by-products, such as LiOH and Li₂CO₃ remain on the surface of the positive electrode active material. In particular, there is a limitation in that the nickel-based positive electrode active material containing a high nickel content has a large amount of residual lithium.

These by-products may react with an electrolyte solution to cause limitations of long-term performance degradation (*e.g.,* long-term lifetime degradation, resistance increase, *etc.*) and stability (*e.g.,* gas generation, *etc.*) of the battery. In addition, a gelation phenomenon may be caused during an electrode slurry preparation process.

In order to prevent this, in the existing process, residual lithium has been controlled through a washing process of mixing and sintering a positive electrode active material precursor and a lithium-containing raw material and then washing the positive electrode active material using deionized water or distilled water.

Meanwhile, in order to effectively control the residual lithium, there is a method of using a large amount of deionized water or distilled water in the washing process, but there may occur a process limitation due to the use of a large amount of deionized water or distilled water, and there may occur a limitation in that a performance of the battery is degraded due to deterioration of the surface of the positive electrode active material.

Accordingly, there is a need for a method for producing a positive electrode active material capable of effectively controlling residual lithium and simultaneously suppressing deterioration of the positive electrode active material.

### DISCLOSURE OF THE INVENTION

### TECHNICAL PROBLEM

An aspect of the present invention provides a method for producing a positive electrode active material, the method being capable of improving thermal stability of the positive electrode active material and minimizing performance degradation of a battery by effectively controlling residual lithium by forming a coating layer containing phosphorus on the surface of the positive electrode active material in a washing process when the positive electrode active material is produced.

### TECHNICAL SOLUTION

According to an aspect of the present invention, there is provided a method for producing a positive electrode active material and a positive electrode active material.
(1) According to an aspect of the present invention, there is provided a method for producing a positive electrode active material, the method including the steps of: (A) preparing a lithium transition metal oxide; and (B) mixing the lithium transition metal oxide and a washing solution, washing the mixture, and then drying the mixture, wherein the washing solution contains a phosphorus-based compound and is a basic solution, and the phosphorus-based compound is contained in the washing solution such that the amount of phosphorus is 100-1,000 ppm in weight based on the lithium transition metal oxide.
(2) In (1) above of the present invention, there is provided the method for producing a positive electrode active material wherein the phosphorus-based compound includes phosphate (PO₄³⁻) .
(3) In (1) or (2) above of the present invention, there is provided the method for producing a positive electrode active material wherein the phosphorus-based compound is at least one selected from among (NH₄)₂HPO₄, Li₃PO₄, and Na₃PO₄.
(4) In any one of (1) to (3) above of the present invention, there is provided the method for producing a positive electrode active material wherein the phosphorus-based compound is contained in the washing solution such that the amount is 250-1,000 ppm in weight based on the lithium transition metal oxide.
(5) In any one of (1) to (4) above of the present invention, there is provided the method for producing a positive electrode active material wherein the washing solution has a pH of 7.00 to 9.00.
(6) In any one of (1) to (5) above of the present invention, there is provided the method for producing a positive electrode active material wherein the solvent of the washing solution is at least one selected from among deionized water, distilled water, and ethanol.
(7) In any one of (1) to (6) above of the present invention, there is provided the method for producing a positive electrode active material wherein the lithium transition metal oxide is represented by Formula 1 below:

   [Formula 1] Li₁₊ₐNiₓ₁Co_{y1}M¹_{z1}M²_{w1}O₂

   wherein, 0≤a≤0.3, 0.6≤x1≤1.0, 0<y1≤0.4, 0<z1≤0.4, 0≤w1≤0.2, and x1+y1+z1+w1=1,
   M¹ is at least one selected from among Mn and Al, and
   M² is at least one selected from among Zr, B, W, Mo, Cr, Nb, Mg, Hf, Ta, La, Ti, Sr, Ba, Ce, F, P, S, and Y.
(8) In any one of (1) to (7) above of the present invention, there is provided the method for producing a positive electrode active material further including a step of (C) mixing a coating element-containing raw material with the lithium transition metal oxide through step (B) above and subjecting the mixture to heat treatment to form a coating layer.
(9) According to another aspect of the present invention, there is provided a positive electrode active material including a lithium transition metal oxide, and a coating layer containing phosphorus (P) formed on the lithium transition metal oxide, wherein the phosphorus is contained in an amount of 100-1,000 ppm in weight based on the lithium transition metal oxide.
(10) In (9) above of the present invention, there is provided the positive electrode active material having a calorific value of at most 1,400 J/g measured by differential scanning calorimetry (DSC).

### ADVANTAGEOUS EFFECTS

The present invention may minimize degradation, occurring in a washing process, on the surface of the positive electrode active material and effectively control residual lithium by using the washing solution, which contains a specific amount of the phosphorus-based compound and is a basic solution, in the washing process. Therefore, the positive electrode active material produced by the method according to the present invention may have excellent thermal stability, and the battery using the positive electrode active material may have excellent performance.

### BEST MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term "on" in the present specification means not only a case in which one component is formed directly on an upper surface of another component, but also includes a case in which intervening components may also be present.

Hereinafter, the present invention will be described in more detail.

### Method for Producing Positive Electrode Active Material

The present inventors have found that in a washing process during the preparation of a positive electrode active material, when a washing solution, which contains a specific amount of the phosphorus-based compound and is a basic solution, is used, the deterioration, occurring in the washing process, on the surface of the positive electrode active material can be minimized and residual lithium can be effectively removed, thereby leading to the completion of the present invention.

A method for producing a positive electrode active material according to the present invention includes the steps of: (A) preparing a lithium transition metal oxide; and (B) mixing the lithium transition metal oxide and a washing solution, washing the mixture, and then drying the mixture, wherein the washing solution contains a phosphorus-based compound and is a basic solution, and the phosphorus-based compound is contained in the washing solution such that the amount of phosphorus is 100-1,000 ppm in weight based on the lithium transition metal oxide.

The method for producing a positive electrode active material according to the present invention may further include a step of (C) mixing a coating element-containing raw material with the lithium transition metal oxide through step (B) above (the dried lithium transition metal oxide) and subjecting the mixture to heat treatment to form a coating layer.

Hereinafter, each step of the method for producing a positive electrode active material will be described in detail.

### Step (A)

The method for producing a positive electrode active material according to the present invention includes a step of preparing a lithium transition metal oxide.

The step of preparing a lithium transition metal oxide may include a step of mixing a positive electrode active material precursor with a lithium-containing raw material and sintering the mixture to produce the lithium transition metal oxide.

The positive electrode active material precursor may be represented by, for example, Formula A or Formula B below:

[Formula A] [NiₓCo_{y}M¹_{z}M²_{w}] (OH) ₂

[Formula B] [NiₓCo_{y}M²_{z}M²_{w}] O ·OH

In Formula A and Formula B above, M¹ may be at least one selected from among Mn and Al, and M² may be at least one selected from among Zr, B, W, Mo, Cr, Nb, Mg, Hf, Ta, La, Ti, Sr, Ba, Ce, F, P, S, and Y.
x above denotes an atomic fraction of nickel among metallic elements in the precursor, wherein x may satisfy 0.6≤x<1, 0.6≤x≤0.98, or 0.7≤x≤0.95.
y above denotes an atomic fraction of cobalt among the metallic elements in the precursor, wherein y may satisfy 0<y≤0.4, 0.01≤y≤0.4, or 0.01≤y≤0.3.
z above denotes an atomic fraction of an M¹ element among the metallic elements in the precursor, wherein z may satisfy 0<z≤0.4, 0.01≤z≤0.4, or 0.01≤z≤0.3.
w above denotes an atomic fraction of an M² element among the metallic elements in the precursor, wherein w may satisfy 0≤w≤0.2, 0≤w≤0.1, 0≤w≤0.05, or 0≤w≤0.02.

The lithium-containing raw material may be, for example, at least one selected from the group consisting of lithium carbonate (Li₂CO₃), lithium hydroxide (LiOH), LiNO₃, CH₃COOLi, and Li₂(COO)₂, and specifically, may be lithium carbonate (Li₂CO₃), lithium hydroxide (LiOH), or a combination thereof.

The positive electrode active material precursor and the lithium-containing raw material may be mixed in a molar ratio of 1:1 to 1:1.625, or 1:1 to 1:1.15 during the preparation of the positive electrode active material. In a case in which the lithium-containing raw material is mixed in a molar ratio of less than the above range, there is a concern that capacity of the positive electrode active material is reduced, and, in a case in which the lithium-containing raw material is mixed in a molar ratio of greater than the above range, unreacted lithium (Li) remains as a by-product, and capacity reduction and separation of positive electrode active material particles (causing a positive electrode active material coalescence phenomenon) may occur after sintering.

The sintering may be performed in a temperature range of 700 °C to 1,000 °C. In a case in which the sintering temperature is less than 700 °C, since the raw materials may remain in the particles due to an insufficient reaction, high-temperature stability of the battery may be reduced and structural stability may be reduced due to decreases in volume density and crystallinity. Meanwhile, when the sintering temperature is higher than 1,000 °C, the particles may grow non-uniformly, and it is difficult to disintegrate the particles, so that capacity reduction, etc. may occur. Meanwhile, in consideration of the particle size control, capacity, and stability of the produced positive electrode active material particles and a reduction in lithium-containing by-products, the sintering temperature may be more specifically in a range of 700 °C to 980 °C.

The sintering may be performed for 5-35 hours. In a case in which the sintering time is less than 5 hours, since reaction time is too short, it may be difficult to obtain a high crystalline positive electrode active material, and, in a case in which the sintering time is greater than 35 hours, the size of the particles may be excessively increased and production efficiency may be reduced.

According to the present invention, the lithium transition metal oxide may be represented by Formula 1 below:

[Formula 1] Li₁₊ₐNiₓ₁Co_{y1}M¹_{z1}M²_{w1}O₂

wherein, 0≤a≤0.3, 0.6≤x1≤1.0, 0<y1≤0.4, 0<z1≤0.4, 0≤w1≤0.2, and x1+y1+z1+w1=1,
M¹ is at least one selected from among Mn and Al, and
M² is at least one selected from among Zr, B, W, Mo, Cr, Nb, Mg, Hf, Ta, La, Ti, Sr, Ba, Ce, F, P, S, and Y.
x1 above denotes an atomic fraction of nickel among the metallic elements other than the lithium in the lithium transition metal oxide, wherein x1 may satisfy 0.6≤x1<1, 0.6≤x1≤0.98, or 0.7≤x1≤0.95.
y1 above denotes an atomic fraction of cobalt among the metallic elements other than the lithium in the lithium transition metal oxide, wherein y1 may satisfy 0<y1≤0.4, 0.01≤yl≤0.4, or 0.01≤y10.3.
z1 above denotes an atomic fraction of M¹ element among the metallic elements other than the lithium in the lithium transition metal oxide, wherein z1 may satisfy 0<z1≤0.4, 0.01≤z1≤0.4, or 0.01≤z1≤0.3.
w1 above denotes an atomic fraction of M² element among the metallic elements other than the lithium in the lithium transition metal oxide, wherein w1 may satisfy 0≤w1≤0.2, 0≤w1≤0.1, 0≤w1≤0.05, or 0≤w1≤0.02.

### Step (B)

The method for producing a positive electrode active material according to the present invention includes a step of mixing the lithium transition metal oxide and a washing solution, washing the mixture, and then drying the mixture.

The present invention may minimize degradation, occurring in a washing process, on the surface of the positive electrode active material and effectively control residual lithium by using the washing solution, which contains a specific amount of the phosphorus-based compound and is a basic solution, in the washing process. Thus, the positive electrode active material produced by the method according to the present invention may have excellent thermal stability, and the battery using the positive electrode active material may have excellent performance. The positive electrode active material produced by the method according to the present invention may include a lithium transition metal oxide, and a coating layer containing phosphorus (P) formed on the lithium transition metal oxide, wherein the phosphorus is contained in an amount of 100-1,000 ppm in weight based on the lithium transition metal oxide.

According to the present invention, even when the lithium transition metal oxide containing a high nickel content is used as in Formula 1, if the washing process is performed using the basic solution containing the phosphorus-based compound, the degradation, occurring in the washing process, on the surface of the positive electrode active material may be minimized and the residual lithium may be effectively controlled, thereby providing a positive electrode active material having excellent performance.

According to the present invention, the phosphorus-based compound may include phosphate (PO₄³⁻). When the washing solution contains phosphate, a coating layer containing phosphorus (P) may be formed on the surface of the lithium transition metal oxide in the washing process.

According to the present invention, the phosphorus-based compound may be at least one selected from among (NH₄) ₂HPO₄, Li₃PO₄, and Na₃PO₄ in terms of improving solubility of a washing solution in a solvent. Specifically, the phosphorus-based compound may be (NH₄)₂HPO₄ in terms of improving removal of residual lithium present on the surface of the lithium transition metal oxide.

According to the present invention, the phosphorus-based compound may be contained in the washing solution such that the amount of phosphorus is 100-1,000 ppm in weight, specifically, 200 ppm, at least 250 ppm, 500 ppm, 600 ppm, 700 ppm, 800 ppm, 900 ppm, or at most 1,000 ppm in weight based on the lithium transition metal oxide. In this case, residual lithium may be effectively controlled, and the coating layer containing phosphorus (P) on the surface of the metal oxide may be formed, thereby improving thermal stability.

When the phosphorus-based compound is contained in the washing solution such that the amount of phosphorus based on to the lithium transition metal oxide is less than 100 ppm in weight, there is a limitation in that the coating layer containing phosphorus is not formed on the lithium transition metal oxide, and thus thermal stability of the positive electrode active material is not improved, and when the phosphorus-based compound is contained in the washing solution such that the amount of phosphorus is greater than 1,000 ppm in weight, there is a limitation in that the coating layer containing phosphorus is formed too thick to facilitate intercalation/deintercalation of lithium ions on the surface of the positive electrode active material, and thus performance, such as efficiency, of the battery is deteriorated.

According to the present invention, the washing solution may have a pH of 7.00 to 9.00, specifically, 7.50, 7.80, at least 7.85, 8.00, 8.10, 8.50, or at most 9.00. In the present invention, the pH is a pH at 25 °C. When the pH of the washing solution is within the above range, residual lithium may be easily removed. In addition, deterioration on the surface due to a concentration difference between the washing solution and the positive electrode material may be minimized.

According to the present invention, the solvent of the washing solution may be at least one selected from deionized water, distilled water, and ethanol. The solvent of the washing solution may be specifically deionized water.

The washing process may be performed for 5 minutes to 30 minutes. In a case in which the time of performing the washing process is within the above range, the residual lithium by-products present on the surface of the lithium transition metal oxide may be easily removed. Accordingly, a gelation phenomenon may not occur during preparation of a positive electrode slurry, and no gas may be generated when used in the battery. In addition, since lithium present in the oxide does not escape during the washing, the performance of the battery may not be degraded.

The drying process is a process for removing moisture from the positive electrode active material containing moisture through the washing process, wherein, after the moisture is removed by using a vacuum pump, drying may be performed at 100 °C to 150 °C for at least 12 hours.

### Step (C)

The method for producing a positive electrode active material according to the present invention may further include a step of mixing a coating element-containing raw material with the lithium transition metal oxide through step (B) above and subjecting the mixture to heat treatment to form a coating layer. Accordingly, a positive electrode active material, in which the coating layer is formed on the surface of the lithium transition metal oxide, may be produced.

A metallic element included in the coating element element-containing raw material may be Zr, B, W, Mo, Cr, Nb, Mg, Hf, Ta, La, Ti, Sr, Ba, Ce, F, P, S, or Y. The coating element-containing raw material may be an acetic acid salt, nitrate, sulfate, halide, sulfide, hydroxide, oxide, or oxyhydroxide containing the metallic element. For example, in a case in which the metallic element is B, boric acid (H₃BO₃) may be used.

The coating element-containing raw material may be contained in an amount of 200-2,000 ppm in weight based on the dried lithium transition metal oxide. In a case in which the amount of the coating element-containing raw material is within the above range, capacity of the battery may be improved, and, since the formed coating layer may suppress a direct reaction between an electrolyte solution and the lithium transition metal oxide, long-term performance characteristics of the battery may be improved.

The heat treatment may be performed in a temperature range of 200 °C to 400 °C. In a case in which the heat treatment temperature is within the above range, a coating layer may be formed while maintaining structural stability of the transition metal oxide. The heat treatment may be performed for 1 hour to 10 hours. In a case in which the heat treatment time is within the above range, a suitable coating layer may be formed and production efficiency may be improved.

### Positive Electrode Active Material

In addition, a positive electrode active material according to the present invention includes a lithium transition metal oxide, and a coating layer containing phosphorus (P) formed on the lithium transition metal oxide, wherein the phosphorus is contained in an amount of 100-1,000 ppm in weight based on the lithium transition metal oxide. The positive electrode active material according to the present invention is produced by the method for producing a positive electrode active material as described above, includes the coating layer containing a specific amount of phosphorus (P), and may have superior thermal stability. Accordingly, the electrochemical performance of the secondary battery including the positive electrode active material according to the present invention may be excellent.

The lithium transition metal oxide may be represented by Formula 1 below:

[Formula 1] Li₁₊ₐNiₓ₁Co_{y1}M¹_{z1}M²_{w1}O₂

wherein, 0≤a≤0.3, 0.6≤x1≤1.0, 0<y1≤0.4, 0<z1≤0.4, 0≤w1≤0.2, and x1+y1+z1+w1=1,
M¹ is at least one selected from among Mn and Al, and
M² is at least one selected from among Zr, B, W, Mo, Cr, Nb, Mg, Hf, Ta, La, Ti, Sr, Ba, Ce, F, P, S, and Y.
x1 above denotes an atomic fraction of nickel among the metallic elements other than the lithium in the lithium transition metal oxide, wherein x1 may satisfy 0.6≤x1<1, 0.6≤x1≤0.98, or 0.7≤x1≤0.95.
y1 above denotes an atomic fraction of cobalt among the metallic elements other than the lithium in the lithium transition metal oxide, wherein y1 may satisfy 0<y1≤0.4, 0.01≤y1≤0.4, or 0.01≤y1≤0.3.
z1 above denotes an atomic fraction of M¹ element among the metallic elements other than the lithium in the lithium transition metal oxide, wherein z1 may satisfy 0<z1≤0.4, 0.01≤z1≤0.4, or 0.01≤z1≤0.3.
w1 above denotes an atomic fraction of M² element among the metallic elements other than the lithium in the lithium transition metal oxide, wherein w1 may satisfy 0≤w1≤0.2, 0≤w1≤0.1, 0≤w1≤0.05, or 0≤w1≤0.02.

According to the present invention, in terms of improving capacity and initial resistance of the secondary battery, the phosphorus may be contained in an amount of 100-1,000 ppm in weight, specifically, 150 ppm, at least 170 ppm, 500 ppm, 600 ppm, 700 ppm, 800 ppm, 900 ppm, or at most 970 ppm in weight based on the lithium transition metal oxide. In this case, the weight of the phosphorus based on the lithium transition metal oxide may be a value obtained through ICP analysis. Specifically, the value may be obtained by i) adding 1 mL of hydrochloric acid to 0.01 g of the positive electrode active material, and then dissolving the sample by heating (0.2 mL of hydrogen peroxide is added to accelerate reaction of the sample), ii) when the sample is completely dissolved, diluting the sample with tertiary ultrapure water so that the solution becomes 30 ml, and then further diluting 1/10 times to prepare an analysis sample, and then iii) using ICP analysis equipment (OPTIMA 8300, PerkinElmer, Inc.).

When the phosphorus is contained in an amount of less than 100 ppm in weight based on the lithium transition metal oxide, there is a limitation in that thermal stability of the positive electrode active material is not improved, and when the phosphorus is contained in an amount of more than 1,000 ppm in weight, there is a limitation in that the coating layer is formed too thick to facilitate intercalation/deintercalation of lithium ions on the surface of the positive electrode active material, and thus performance, such as efficiency, of the battery is deteriorated.

According to the present invention, the positive electrode active material has improved thermal stability of the positive electrode active material itself, and thus the calorific value measured by the differential scanning calorimetry (DSC) may be at most 1,400 J/g, specifically, 1,200 J/g, at least 1,250 J/g, 1,350 J/g, or at most 1,380 J/g.

According to the present invention, the phosphorus may be specifically contained in an amount of 200-900 ppm in weight, more specifically, 200-500 ppm in weight, based on the lithium transition metal oxide. In this case, the positive electrode active material according to the present invention may have a calorific value of at most 1,350 J/g measured by the differential scanning calorimetry (DSC). That is, when the phosphorus is within the above amount range, not only the thermal stability of the positive electrode active material itself may be further improved, but also the characteristics of the secondary battery including the positive electrode active material may be further improved.

### Positive Electrode

In addition, the present invention provides a positive electrode for a lithium secondary battery which includes the above positive electrode active material. Specifically, the positive electrode for a secondary battery includes a positive electrode collector and a positive electrode active material layer formed on the positive electrode collector, wherein the positive electrode active material layer includes the positive electrode active material according to the present invention.

In this case, since the positive electrode active material is the same as described above, detailed descriptions thereof will be omitted, and the remaining configurations will be only described in detail below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as a film, a sheet, a foil, a net, a porous body, a foam body, and a non-woven fabric body.

The positive electrode active material layer may include a conductive agent and a binder in addition to the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, and any conductive agent may be used without particular limitation as long as it has electron conductivity without causing adverse chemical changes in the battery to be constituted. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be produced according to a typical method for producing a positive electrode except that the above-described positive electrode active material is used. Specifically, a composition for forming a positive electrode active material layer, which is produced by dissolving or dispersing the positive electrode active material as well as optionally the binder and the conductive agent in a solvent, is coated on the positive electrode collector, and the positive electrode may then be produced by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be produced by casting the composition for forming a positive electrode active material layer on a separate support and then laminating a film separated from the support on the positive electrode collector.

### Lithium Secondary Battery

Furthermore, in the present invention, an electrochemical device including the positive electrode may be produced. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container which accommodates an electrode assembly of the positive electrode, the negative electrode, and the separator, and a sealing member which seals the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and as in the case of the positive electrode collector, microscopic irregularities may be formed on the surface of the negative electrode collector to enhance the adhesion of a negative electrode active material. The negative electrode collector, for example, may be used in various shapes such as a film, a sheet, a foil, a net, a porous body, a foam body, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOβ(0<β<2), SnO2, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be produced by coating a negative electrode material mixture, which is produced by dissolving or dispersing optionally the binder and the conductive agent as well as the negative electrode active material in a solvent, on the negative electrode collector and drying the coated negative electrode collector, or may be produced by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Meanwhile, in the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film produced from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAl0₄, LiAlCl₄, LiCF₃SO₃, LiC₄F₉SO₃, LiN (C₂F₅SO₃) ₂, LiN (C₂F₅SO₂)₂, LiN (CF₃SO₂)₂, LiCl, LiI, or LiB (C₂O₄) ₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

The lithium secondary battery including the positive electrode active material according to the present invention as describe above stably exhibits excellent discharge capacity, output properties, and lifespan properties, and thus, are useful for portable devices such as a mobile phone, a notebook computer, and a digital camera, and in the field of electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Example

### Example 1

NiSO₄, CoSO₄, and MnSO₄ were mixed in water in an amount to have a molar ratio of nickel:cobalt:manganese of 88:5:7 to prepare a 2.4 M transition metal-containing solution. A container containing the transition metal-containing solution and additionally a NaOH aqueous solution having a concentration of 25 wt% and an NH₄OH aqueous solution having a concentration of 9 wt% were connected to a continuous filtration tank reactor (CFTR) set to 50 °C and equipped with a 350-L filtration apparatus (filter), respectively. Subsequently, 86 L of deionized water was put in the reactor, the reactor was then purged with nitrogen gas at a rate of 0.2 L/min to remove dissolved oxygen in water, and a non-oxidizing atmosphere was created in the reactor. Then, 100.8 g of a 5 wt% NaOH aqueous solution and 3,406 g of a 9 wt% NH₄OH aqueous solution were added to the reactor and stirred at a stirring rate of 700 rpm to prepare a reaction mother liquor having a pH of 11.7 to 11.9.

Thereafter, the transition metal-containing solution, the NaOH aqueous solution, and the NH₄OH aqueous solution were added to the reactor to induce the formation and agglomeration of nickel cobalt manganese hydroxide particles, thereby forming a precursor core. In this case, the transition metal-containing solution was added at a rate of 57.4 mol/hr, and the NH₄OH aqueous solution was added at a rate of 17 mol/hr, and the NaOH aqueous solution was added at a rate at which the pH of the reaction solution was maintained at 10.5 to 11.2. Subsequently, the reaction was performed while adjusting the amount of the NaOH aqueous solution added such that the pH of the reaction solution reached 11.3 to 11.5, thereby growing nickel cobalt manganese hydroxide particles. The total reaction time obtained by adding the precursor core formation time and the particle growth time was 40 hours. Then, the grown nickel cobalt manganese hydroxide particles were further reacted for 8 hours to be stabilized. Meanwhile, the reaction was carried out while continuously discharging the filtrate through the filtration apparatus in the reactor when the reactor became full.

Next, the nickel cobalt manganese hydroxide particles formed through the above process were separated, washed with water, and then dried at 60-120 °C for 12-30 hours to produce a precursor in which Ni_{0.88}Co_{0.05}Mn_{0.07}(OH)₂ and Ni_{0.88}Co_{0.05}Mn_{0.07}O·OH phases were mixed.

Then, the precursor and LiOH were mixed in a molar ratio of 1:1.08 and then sintered at 780 °C for 10 hours in an oxygen atmosphere to produce a lithium transition metal oxide having a formula, Li[Ni_{0.88}Co_{0.05}Mn_{0.07}]O₂.

Deionized water and (NH₄)₂HPO₄ were mixed to produce a washing solution. In this case, (NH₄)₂HPO₄ was added to the washing solution such that the weight of phosphorus became 250 ppm based on the lithium transition metal oxide, and the pH of the washing solution at 25 °C was 7.87.

The lithium transition metal oxide and the washing solution were mixed at a weight ratio of 1:1, washed with water for 5 minutes, then filtered for 2 minutes using a vacuum pump, and dried in a vacuum oven at 130 °C for at least 12 hours.

The dried lithium transition metal oxide was mixed with H₃BO₃ powder (1,000 ppm in weight based on the dried lithium transition metal oxide) and then subjected to heat treatment at 300 °C for 5 hours to produce a positive electrode active material in which the coating layer containing phosphorus was formed on the lithium transition metal oxide.

### Example 2

A positive electrode active material was produced in the same manner as in Example 1 except that (NH₄)₂HPO₄ was added to a washing solution such that the weight of phosphorus became 500 ppm based on the lithium transition metal oxide, and the washing solution having a pH of 7.93 at 25 °C was prepared.

### Example 3

A positive electrode active material was produced in the same manner as in Example 1 except that (NH₄)₂HPO₄ was added to a washing solution such that the weight of phosphorus became 1,000 ppm based on the lithium transition metal oxide, and the washing solution having a pH of 8.09 at 25 °C was prepared.

### Comparative Example 1

A positive electrode active material was produced in the same manner as in Example 1 except for using deionized water as a washing solution.

### Comparative Example 2

A positive electrode active material was produced in the same manner as in Example 1 except that phosphate (H₃PO₄) instead of (NH₄)₂HPO₄ was added to a washing solution such that the weight of phosphorus became 250 ppm based on the lithium transition metal oxide, and the washing solution having a pH of 2.24 at 25 °C was prepared.

### Comparative Example 3

A positive electrode active material was produced in the same manner as in Example 1 except that (NH₄)₂HPO₄ was added to a washing solution such that the weight of phosphorus became 50 ppm based on the lithium transition metal oxide, and the washing solution having a pH of 7.82 at 25 °C was prepared.

### Comparative Example 4

A positive electrode active material was produced in the same manner as in Example 1 except that (NH₄)₂HPO₄ was added to a washing solution such that the weight of phosphorus became 1,100 ppm based on the lithium transition metal oxide, and the washing solution having a pH of 8.12 at 25 °C was prepared.

### Experimental Examples

### Experimental Example 1: ICP Analysis

ICP analysis was performed to determine how much phosphorus was contained in the positive electrode active materials produced in Examples 1 to 3 and Comparative Examples 2 to 4.

After adding 1 mL of hydrochloric acid to each of the positive electrode active materials (0.01 g) produced in Examples 1 to 3 and Comparative Examples 2 to 4, the samples were dissolved by heating. In this case, 0.2 mL of hydrogen peroxide was added to accelerate the reaction of the sample. After the sample was completely dissolved, the solution was diluted with tertiary ultrapure water to become 30 ml, further diluted 1/10 times to prepare an analysis sample, and then it was analyzed using ICP analysis equipment (OPTIMA 8300, PerkinElmer Inc.) what weight of phosphorus (P) was contained based on the lithium transition metal oxide. The results thereof are listed in Table 1 below.

**[Table 1]**

| | Weight of phosphorus based on lithium transition metal oxide (ppm) | Notes |
|---|---|---|
| Example 1 | 171 | Add (NH₄)₂HPO₄ in washing solution such that weight of phosphorus became 250 ppm based on lithium transition metal oxide |
| Example 2 | 465 | Add (NH₄)₂HPO₄ in washing solution such that weight of phosphorus became 500 ppm based on lithium transition metal oxide |
| Example 3 | 961 | Add (NH₄)₂HPO₄ in washing solution such that weight of phosphorus became 1,000 ppm based on lithium transition metal oxide |
| Comparative Example 2 | 90 | Add H₃PO₄ in washing solution such that weight of phosphorus became 250 ppm based on lithium transition metal oxide |
| Comparative Example 3 | 31 | Add (NH₄)₂HPO₄ in washing solution such that weight of phosphorus became 50 ppm based |
| | | on lithium transition metal oxide |
| Comparative Example 4 | 1065 | Add (NH₄)₂HPO₄ in washing solution such that weight of phosphorus became 1,100 ppm based on lithium transition metal oxide |

### Experimental Example 2: DSC Analysis

DSC analysis was performed to evaluate thermal stability of the positive electrode active materials produced in Examples 1 to 3 and Comparative Examples 1 to 4.

Specifically, each of the positive electrode active materials produced in Examples 1 to 3 and Comparative Example 1 to 4, a carbon black conductive agent, and a PVdF binder were mixed in an NMP solvent at a weight ratio of 97.5:1.0:1.5 to produce a positive electrode slurry. One surface of an aluminum current collector was coated with the positive electrode slurry, dried at 130 °C, and then rolled to produce a positive electrode. Meanwhile, a lithium (Li) metal disk was used as a negative electrode active material. After an electrode assembly was produced by disposing a separator between the positive electrode and the Li metal disk negative electrode produced as described above, a lithium secondary battery half-cell was produced by disposing the electrode assembly in a battery case and then injecting an electrolyte solution into the case. In this case, as the electrolyte solution, an electrolyte solution, in which 1 M LiPF₆ was dissolved in an organic solvent of EC/EMC/DEC (3/3/4, vol%), was used.

The lithium secondary battery half-cell produced as described above was charged at 25 °C under a CC-CV mode at 0.2 C until it reached 4.3V, discharged at 0.2 C until 3.0 V, and then charged again at 0.2 C until it reached 4.3V. After the charged cell was disassembled, the positive electrode was washed with DMC, and was punched to make four positive electrodes having a diameter of 3 mm. The punched positive electrode was placed in a DSC-dedicated cell, and then an electrolyte solution was injected to produce a cell for DSC analysis.

The cell for DSC analysis produced as described above and a reference cell were changed in temperatures from 25 °C to 300 °C at 10 °C/min, and a calorific value was measured from the temperature difference between the cell for DSC analysis and the reference cell. The results thereof are listed in Table 2 below.

**[Table 2]**

| | Calorific value (J/g) |
|---|---|
| Example 1 | 1282 |
| Example 2 | 1315 |
| Example 3 | 1378 |
| Comparative Example 1 | 1474 |
| Comparative Example 2 | 1455 |
| Comparative Example 3 | 1434 |
| Comparative Example 4 | 1393 |

It may be confirmed that the positive electrode active materials produced in Examples 1 to 3 were produced using the washing solution containing a specific amount of the phosphorus-based compound, particularly, (NH₄)₂HPO₄, and thus have the thermal stability superior to that of Comparative Examples 1 to 4.

### Experimental Example 3: Evaluation of Characteristics of Lithium Secondary Battery Half-cell

Lithium secondary battery half-cells were produced using the positive electrode active materials produced in Examples 1 and 2 and Comparative Examples 1 to 4, and charge/discharge capacity, initial efficiency, and initial resistance were evaluated for each of the lithium secondary battery half-cells.

Specifically, after the lithium secondary battery half-cell was produced in the same manner as in the DSC analysis, charge/discharge was performed as the lithium secondary battery half-cell was charged under a CC-CV mode at 25 °C at 0.1 C until it reached 4.3 V, and discharged at 0.1 C until 3.0 V, and at this performance, charge/discharge capacity, initial efficiency, and initial resistance values were obtained, and the results are shown in Table 3 below.

In addition, the discharge capacity of the lithium secondary battery was measured by repeating a charge/discharge cycle 30 times at a constant current of 0.33 C in a voltage range of 3.0 V to 4.3 V at 45 °C, and, particularly, the ratio of 30th cycle discharge capacity to 1st cycle discharge capacity was defined as a capacity retention and the capacity retentions are listed in Table 1 below. In addition, the voltage drop for 60 seconds after the start of discharging in each cycle was measured, and the resistance value at a high temperature was confirmed by dividing the voltage drop by the applied current value, and in particular, the ratio of the 30th cycle resistance value to the 1st cycle resistance value was used as a resistance increase rate, and the results are listed in Table 3 below.

**[Table 3]**

| | Charge capaci ty (mAh/g ) | Discha rge capaci ty (mAh/g ) | Initia l effici ency (%) | Initia l resist ance (Ω, DCIR) | Capaci ty retent ion (%, 30 cycle) | Resist ance increa se rate (%, 30 cycle) |
|---|---|---|---|---|---|---|
| Example 1 | 227.7 | 204.7 | 89.9 | 14.4 | 97.7 | 119.0 |
| Example 2 | 227.4 | 204.4 | 89.9 | 14.5 | 97.6 | 119.1 |
| Example 3 | 226.7 | 203.5 | 89.7 | 14.8 | 97.5 | 118.9 |
| Comparative Example 1 | 227.9 | 203.7 | 89.4 | 15.6 | 97.9 | 129.0 |
| Comparative Example 2 | 226.9 | 204.2 | 90.0 | 14.8 | 97.4 | 129.9 |
| Comparative | 227.6 | 203.6 | 89.5 | 15.3 | 97.8 | 126.0 |
| Example 3 | | | | | | |
| Comparative Example 4 | 226.7 | 202.3 | 89.2 | 15.4 | 97.4 | 125.2 |

It may be confirmed that the lithium secondary batteries including the positive electrode active materials of Examples 1 to 3 have initial efficiency and capacity retention at high temperatures, which are equivalent to those of the lithium secondary batteries including the positive electrode active materials of Comparative Examples 1 to 4, improved initial resistance, and a remarkably low resistance increase rate at high temperatures, and thus have excellent long-term performance.

## Claims

1. A method for producing a positive electrode active material, the method comprising the steps of:
(A) preparing a lithium transition metal oxide; and
(B) mixing the lithium transition metal oxide and a washing solution, washing the mixture, and then drying the mixture,
wherein the washing solution contains a phosphorus-based compound and is a basic solution, and
the phosphorus-based compound is contained in the washing solution such that the amount of phosphorus is 100-1,000 ppm in weight based on the lithium transition metal oxide.

2. The method of claim 1, wherein the phosphorus-based compound comprises phosphate (PO₄³⁻).

3. The method of claim 1, wherein the phosphorus-based compound is at least one selected from among (NH₄)₂HPO₄, Li₃PO₄, and Na₃PO₄.

4. The method of claim 1, wherein the phosphorus-based compound is contained in the washing solution such that the amount is 200-1,000 ppm in weight based on the lithium transition metal oxide.

5. The method of claim 1, wherein the washing solution has a pH of 7.00 to 9.00.

6. The method of claim 1, wherein the solvent of the washing solution is at least one selected from among deionized water, distilled water, and ethanol.

7. The method of claim 1, wherein the lithium transition metal oxide is represented by Formula 1 below:
[Formula 1] Li₁₊ₐNiₓ₁Co_{y1}M¹_{z1}M²_{w1}O₂
wherein, 0≤a≤0.3, 0.6≤x1≤1.0, 0<y1≤0.4, 0<z1≤0.4, 0≤w1≤0.2, and x1+y1+z1+w1=1,
M¹ is at least one selected from among Mn and Al, and
M² is at least one selected from among Zr, B, W, Mo, Cr, Nb, Mg, Hf, Ta, La, Ti, Sr, Ba, Ce, F, P, S, and Y.

8. The method of claim 1, further comprising a step of (C) mixing a coating element-containing raw material with the lithium transition metal oxide through step (B) above and subjecting the mixture to heat treatment to form a coating layer.

9. A positive electrode active material comprising:
a lithium transition metal oxide; and
a coating layer containing phosphorus (P) formed on the lithium transition metal oxide,
wherein the phosphorus is contained in an amount of 100-1,000 ppm in weight based on the lithium transition metal oxide.

10. The positive electrode active material of claim 1, wherein the positive electrode active material has a calorific value of at most 1,400 J/g measured by differential scanning calorimetry (DSC).
